# EUROPÄISCHE PATENTSCHRIFT

(11) **EP 1 028 360 B1**
(45) Veröffentlichungstag und Bekanntmachung des Hinweises auf die Patenterteilung: **29.10.2003**
(21) Anmeldenummer: 00102754.9
(22) Anmeldetag: 10.02.2000
(51) Int. Cl.: G05B 19/042

(54) **Vorrichtung zum Verarbeiten sicherheitsrelevanter Daten**
Apparatus for processing relevant safety data
Appareil de traitement des données pertinentes de sécurité

(30) Priorität: 12.02.1999 DE 19905841
(43) Veröffentlichungstag der Anmeldung: 16.08.2000
(73) Patentinhaber: KUKA Roboter GmbH, 86165 Augsburg (DE)
(72) Erfinder: Roth, Stefan, 86485 Eisenbrechtshofen (DE)
(74) Vertreter: Lempert, Jost, Dipl.-Phys. Dr. rer.nat.

(56) Entgegenhaltungen:
- EP-A- 0 287 992
- EP-A- 0 837 394
- DE-A- 4 335 116
- DE-A- 4 416 795
- US-A- 5 369 569

## Beschreibung

Die Erfindung betrifft ein Verfahren zum Verarbeiten von Daten nach dem Oberbegriff des Anspruchs 1.

Bisher werden in busbasierten Sicherheitseinrichtungen für Maschinen, wie Robotern oder dergleichen, Daten immer in einem Zentralrechner gesammelt und verarbeitet. Um eine Reaktion zu bewirken, werden die im Zentralrechner berechneten Ergebnisse dann wieder auf den Bus verteilt. Es ergibt sich insbesondere ein Informationsverlust der Kommunikation deswegen, weil zur Sicherstellung vertretbarer Reaktionszeiten zum einen aufgrund der Übertragung, zum anderen aufgrund der Berechnung die datenkomplexen Systeme komprimiert werden müssen.

Darüberhinaus ist es notwendig das Auswertesystem, also den Zentralrechner einem Busausbau, insbesondere hinsichtlich Zwischenspeicher anzupassen. Der Zwischenspeicher muß bei einem Ausbau erweitert werden, damit die gesamten zur Auswertung notwendigen Informationen aus dem Bus gesammelt werden können. Der Zentralrechner muß in der Lage sein, in gegebener Zeit aus dem ermittelten Eingangs-Prozeßbild das Ausgangs-Prozeßbild zu berechnen.

Weiterhin können Diagnoseeinrichtungen den Sicherheitskreis beeinflussen, wodurch sich die Notwendigkeit ergibt auch die Diagnoseeinrichtung selbst Sicherheitsüberprüfungen zu unterziehen, weil diese Daten auf dem Bus manipuliert und damit die sichere Funktion des Systems beeinflussen kann. Schließlich ist zur Installation einer Diagnoseeinheit ein Eingriff in die Ringstruktur des Sicherheitsbusses erforderlich. Dieser muß für die Diagnose so umkonfiguriert werden, daß die Diagnoseeinheit als zusätzlicher Teilnehmer im Ring akzeptiert wird. Hierdurch ergibt sich ein Sicherheitsrisiko, das überprüft und ausgeschaltet werden muß. Insgesamt sind daher bekannte Sicherheitseinrichtungen nicht für die gegebenen Sicherheitsanwendungen optimiert.

Die DE 43 35 116 A1 zeigt ein Feldbussystem mit Ringtopologie für die Kommunikation zwischen einem Leitrechner und Endgeräten der Prozesskontrolle, bei dem in jedem Knoten auf drei Datenleitungen parallel Daten empfangen, verglichen und somit auch verarbeitet werden. Anschliessend werden die Daten wieder parallel auf drei Leitungen zum nächsten Knoten weitergegeben. Über das Verhältnis der aufeinanderfolgenden Knoten zueinander und der in diesem erfolgenden Arbeitsschritte macht die Druckschrift keine Aussage.

Der Erfindung liegt die Aufgabe zugrunde ein Verfahren der eingangs genannten Art dahingehend weiterzubilden, daß unter Vermeidung der oben genannten Nachteile eine Optimierung hinsichtlich der Sicherheitsanwendungen unter Minimierung von Offsetzeiten Schaffung einer einfachen Diagnosemöglichkeit gegeben ist.

Erfindungsgemäß wird die genannte Aufgabe mit einem Verfahren der eingangs genannten Art dadurch gelöst, welches weiterhin die kennzeichnenden Merkmale des Anspruchs 1 aufweist.

In weiterer bevorzugter Ausgestaltung ist vorgesehen, daß zur Diagnose eine Diagnoseeinheit die in mindestens einem Knoten vorhandenen Daten passiv aufnimmt.

Senden und Empfangen und/oder das Auswerten von Daten erfolgt solange auf allen Knoten gleichzeitig, bis alle Daten einer Ringkommunikation bearbeitet sind, wobei allerdings die Knoten nicht identische Daten verarbeiten. Jeder Knoten verarbeitet viele mehr zur gleichen Zeit wie die anderen Knoten die ihm jeweils vom vorherigen Knoten übergebenen Daten, die von Knoten zu Knoten unterschiedlich sein können.

Durch die Erfindung wird erreicht, daß eine Verbindung zwischen zwei Knoten und jeder Knoten selbst unabhängig von anderen Knoten des ringförmigen Busses betrieben werden können . Alle Einzelverbindungen des Ringes zwischen zwei Knoten werden gleichzeitig bzw. parallel betrieben und in den Knoten werden die dort vorhandenen Informationen gleichzeitig bzw. parallel verarbeitet. Die kommunizierte Information wird bei jeder nahezu zeitgleichen Einzelverbindung mit einer dem Knoten schon vorher der Art nach bekannten Information beladen. Der Informationsgehalt bleibt über den gesamten ringförmigen Bus verteilt. Ein Informationsverlust beim Schnüren eines zyklischen Datenpaketes wird so vermieden. Die Ringstruktur des Mediums wird daher als gleichzeitig ständig aktueller Speicher für alle im Bus vorhandenen Prozeßdaten verwendet. Es ist kein eigener Speicher für die Information im Einzelknoten notwendig. Alle Teilnehmer greifen auf die gleichen Daten der Ringkommunikation zu und werten diese redundant aus. Eine angeschlossene Diagnoseeinheit kann deshalb auch alle Daten auswerten, ohne selbst Kommunikations- bzw. Sicherheitsaufgaben wahrzunehmen, da das im Ring kommunizierte Prozeßbild quasi simultan aktualisiert wird.

Daten müssen nicht zusammengefaßt und komprimiert werden, so daß sich kein Informationsverlust in Bezug auf sicherheitsrelevante Daten auf dem Ringbus ergibt. Die Kommunikation, die alle sicherheitsrelevanten Informationen des Ringbusses enthält, braucht zum Zweck der Diagnose nicht beeinflusst werden. Eine Diagnoseeinheit muß daher keine eigenen Befehle auf den Bus absetzen. Sie kann die für sie notwendigen Informationen durch bloßes Kontaktieren am Bus, also als "Mithörer", gewinnen. Die Diagnoseeinheit kann Busdaten nicht manipulieren und braucht daher auch keine sicherheitsrelevante Baugruppe sein. Zum Kontaktieren der Diagnoseeinheit muß das Sicherheitssystem nicht aufgebrochen werden und die Diagnoseeinheit kein zusätzlicher Teilnehmer konfiguriert werden.

Eine Anpassung eines Zentralrechners bei Erweiterung des Ringbus-Sicherheitssystems ist nicht erforderlich, da ggf. ein zusätzlicher Teilnehmer (Knoten) als solcher die gesamten erforderlichen Ressourcen (Rechner, Speicher) mitbringt.

Durch das erfindungsgemäße Verfahren wird die Kommunikationsdauer für eine Ringkommunikation gegenüber dem Bekannten kaum verlängert, kann sogar viel mehr aufgrund der parallelen Datenverarbeitung und Datenweiterleitung reduziert werden.

Weitere Vorteile und Merkmale der Erfindung ergeben sich aus den Ansprüchen und der nachfolgenden Beschreibung, in der ein Ausführungsbeispiel der Erfindung unter Bezugnahme auf die Zeichnungen im einzelnen dargestellt ist.

Dabei zeigt:
- Figur 1:: eine schematische Darstellung eines der Erfindung zugrundeliegenden Sicherheitssystems mit Ringbusstruktur und
- Figur 2:: den erfindungsgemäßen Informationsfluß in einem Knoten.

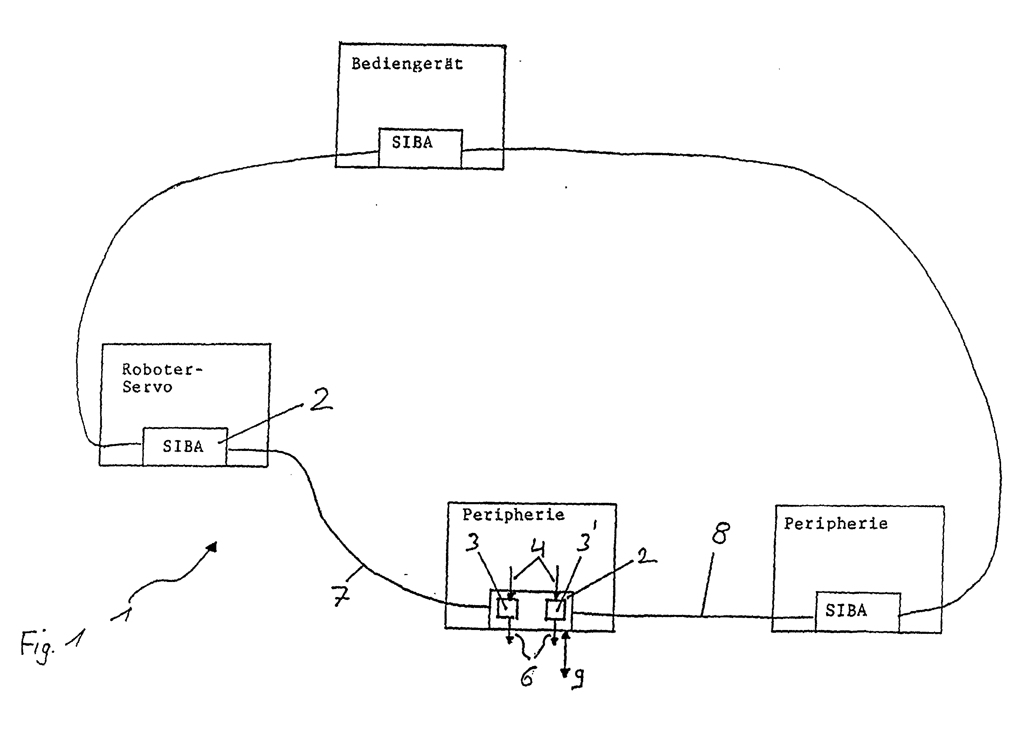

Die Figur 1 zeigt ein Sicherheitssystem mit Ringbusstruktur. Das Sicherheitssystem 1 weist einen Ring mit miteinander verbundenen wesentlichen identischen Knoten 2 auf. Jeder Knoten 2 weist redundant zwei Mikroprozessoren 3, 3' auf, die identische Sicherheitsverknüpfungen durchführen und sich im Ergebnis gegenseitig überprüfen. Jeder Knoten weist zweikanalig ausgeführte sicherheitsrelevante Eingänge 4 auf, um sicherheitsrelevante Signale einzulesen. Bei der zweikanaligen Ausgestaltung der Eingänge 4 verfügt jeder Mikroprozessor eines Knotens über einen Kanal des Eingangssignals. Jeder Knoten 2 weist weiterhin ebenfalls zweikanalig, sicherheitsrelevante Ausgänge 5 auf, um sicherheitsrelevante Stellglieder der zu überwachenden Maschine, wie eines Roboters, anzusteuern, in der Regel ein Notaus zu bewirken. Die sicherheitsrelevanten Eingänge werden durch beide Mikroprozessoren parallel ausgewertet.

Darüberhinaus weist jeder Knoten eine ankommende serielle Schnittstelle 6 und eine weiterleitende serielle Schnittstelle 7 auf. Die seriellen Schnittstellen sind derart ausgeführt, daß über sie ein Byte, also 8 Bit parallel übertragen werden können. Schließlich weisen die Knoten noch informelle Eingänge 9 zur Diagnose, Fehlanzeige oder dergleichen, auf.

Im übrigen kann ein derart gebildeter Sicherheitsring mit ebenso ausgebildeten Sicherheitsringen verknüpft werden und zwar entweder direkt oder aber über einen zwischengeordneten Ring, der keine Überwachungs- und Steuerfunktionen für die zu überwachende Maschine ausübt, sondern lediglich die Verbindung zwischen mehreren Sicherheitsringen (wie beispielsweise mit mehreren Robotern in einer Arbeitseinheit) als übergeordneter Supervisor-Ring fungiert. Hierdurch können mehrere Roboter zu einer einzigen Sicherheitszelle verbunden werden.

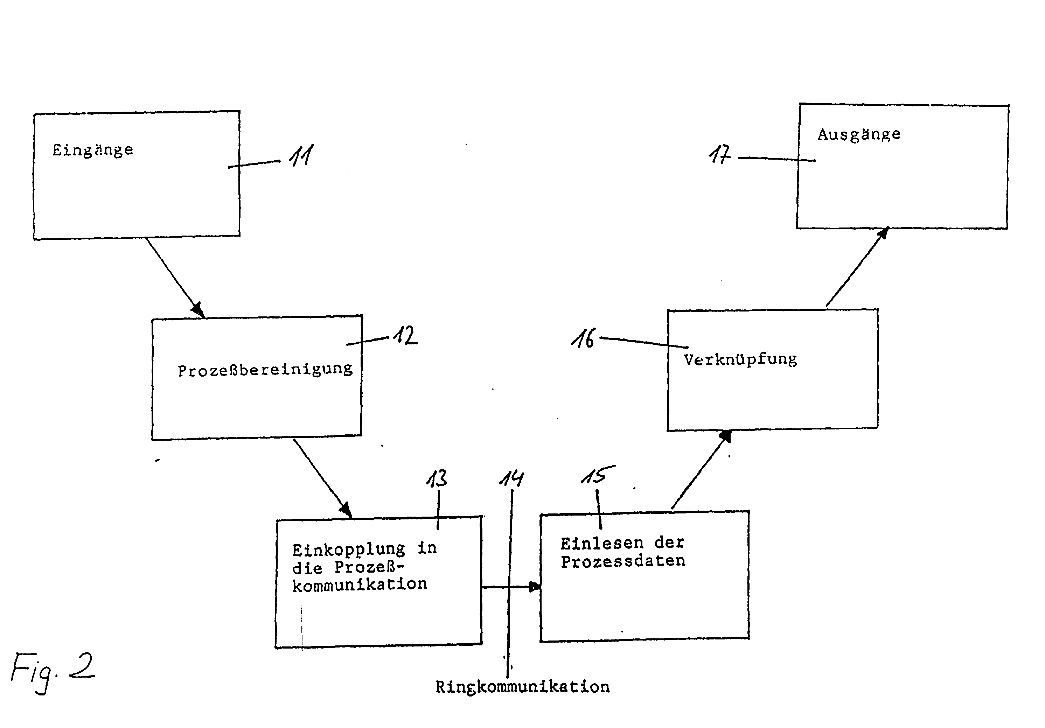

Während der Informationsfluß bisher derart erfolgte, daß über einen Slave-Knoten die relevante Sicherheitsinformation der Maschine aufgenommen und in die Prozeßkommunikation eingekuppelt und zu einer zentralen Datenverarbeitungseinheit, wie einem Masterknoten in Form einer speicherprogrammierten Steuerung (SPS) etc. weitergeleitet, dort verarbeitet und dann wieder in den Kommunikationsring abgegeben und nach Einlesen der Prozeßdaten im Slave-Knoten der entsprechende Ausgang gesteuert wurde, sieht die Erfindung gemäß der Figur 2 vor, daß im jeweiligen Knoten nach Aufnahme der Eingangssignale 11 eine Prozeßbereinigung 12 derselben und eine Einkopplung in die Prozeßkommunikation 13 sowie nach Einlesen der Prozeßdaten 15 aus der Ringkommunikation 14 unmittelbar die Verknüpfung 16 der Daten erfolgt und der sicherheitsrelevante Ausgang 17 ggf. angesteuert wird.

Hierdurch wird erreicht, daß Verarbeitungsvorgänge parallel im ringförmigen Sicherheitssystem vorhandenen Knoten erfolgen können. Durch die Parallelität der Kommunikation wird erreicht, daß mit unkomprimierten Daten kommuniziert werden kann. Diese sind für die Diagnose notwendig.

Die parallele Datenverarbeitung ist in der Tabelle I dargestellt. Alle jeweils in einer Zeile stehenden Datenpakete werden, im Gegensatz zur üblichen Vorgehensweise, in jedem Schritt (nach jeder Zeile) ausgewertet. Als Schritt ist hier eine Zeile bezeichnet. In einer Zeile bearbeitet jeder Controller genau einen Datenumfang oder ein -paket eines fremden Controllers. Aus diesem Grund benötigt der einzelne µ-Controller nur einen Speicher für eben diesen einzelnen Datenumfang. Der Speicher ist also unabhängig von der Länge des Rings.

Die Kommunikation arbeitet mit dem Reflex im einzelnen µ-Controller. Dies bedeutet, daß jeder Slave-Controller das als nächstes zu sendende Datenpaket bereits im Sendepuffer abgespeichert hat (also andere Daten), bevor er das nächste Datenpaket erhält. Dies ermöglicht in dem Augenblick in dem erkannt wird, daß Daten empfangen werden, sofort Daten zu senden. So wird Senden und Empfangen praktisch parallelisiert. Die Reaktions- und Signallaufzeiten zwischen den einzelnen Controllern verursachen allerdings einen Offset. Da jedoch die Reaktionszeiten der Controller wesentlich kleiner sind wie die Zeit, die zu einer kompletten Übertragung eines Datenpakets (ein Feld in der Tabelle) notwendig ist, ist praktisch Parallelität gegeben. Es erfolgt also die Datenkommunikation sämtlicher Knoten mit unterschiedlichen Dateninhalten (siehe Tabelle) aber gleich langen Datenpaketen parallel.

Die Ringkommunikation besteht also aus Einzelkommunikationen mit deren Auswertung (die Zeilen 1- 14 der Tabelle) in harter Folge. Die Summe der Reflexzeiten ist dafür nicht relevant, genausowenig die Signallaufzeiten. Dieser Vorgang läuft solange parallel bis die gesamte Ringkommunikation abgeschlossen ist. Erst nach dieser vollständigen Ringkommunikation werden controllerinterne Daten ausgewertet und Überwachungen bearbeitet (Zeile 15). Dies erfolgt ebenfalls gleichzeitig. Einen minimalen Offset ergibt sich durch die Summe der Reaktionszeiten. Diese Summe entspricht 1/ntel der Zeit die benötigt wird um ein einzelnes Datum einmal um den Ring zu senden. Dabei gibt n die Zahl der beteiligten Controller an, also die doppelte Anzahl der Knoten.

Nach einer Ringkommunikation haben alle Teilnehmer quasi oder praktisch gleichzeitig, eben am Ende dieser Kommunikation alle notwendigen Daten erhalten, die zur Aktualisierung aller Ein- und Ausgänge notwendig sind. Auch dieses erfolgt praktisch parallel an allen Knoten am zeitlichen Ende der Zeile 15. Der Master beginnt danach in Zeile 16 erneut mit der Kommunikation. Hier und an dieser Stelle kann sich bei sehr langen Bussystemen eine zusätzliche Wartezeit ergeben. Das ist die Differenz zwischen der Datenverarbeitungszeit im Master und der Zeit die das erste Datenpaket der alten Ringkommunikation, das durch die kumuulierten Reaktionszeiten verzögert wurde.

Im einzelnen: Wird ein Byte empfangen, so wird zunächst das vorbereitete, also vorher erarbeitete Ausgabewort abgeschickt. Danach wird das empfangene Wort ausgewertet und das nächste Ausgabewort vorbereitet. Hierdurch wird erreicht, daß der gesamte Ring praktisch gleichzeitig kommuniziert. Die erste Zeile der Tabelle 1 gibt die Knotennummer an. A und B unterscheiden dabei die beiden Mikroprozessoren im jeweiligen Knoten. Für die Knotennummer wird der Laufindex n verwendet (im Beispiel n gleich null bis vier). Die Bezeichnung n' steht für das erste Verknüpfungsergebnis des n-ten-Knotens und n steht für das prozeßbereinigte Eingangs-Datenwort des n-ten-Knotens.

| **Zeile** | **0A** | **0B** | **1A** | **1B** | **2A** | **2B** | **3A** | **3B** | **4A** | **4B** |
|---|---|---|---|---|---|---|---|---|---|---|
| 1 | 0A | 0B | 1A | 1B | 2A | 2B | 3A | 3B | 4A | 4B |
| 2 | | 0A | | 1A | | 2A | | 3A | | 4A |
| 3 | D0A | 0' | D1A | 1' | D2A | 2' | D3A | 3' | D4A | 4' |
| 4 | 4 | D0 | 0 | D1 | 1 | D2 | 2 | D3 | 3 | D4 |
| 5 | D4 | 4 | D0 | 0 | D1 | 1 | D2 | 2 | D3 | 3 |
| 6 | 3 | D4 | 4 | D0 | 0 | D1 | 1 | D2 | 2 | D3 |
| 7 | D3 | 3 | D4 | 4 | D0 | 0 | D1 | 1 | D2 | 2 |
| 8 | 2 | D3 | 3 | D4 | 4 | D0 | 0 | D1 | 1 | D2 |
| 9 | D2 | 2 | D3 | 3 | D4 | 4 | D0 | 0 | D1 | 1 |
| 10 | 1 | D2 | 2 | D3 | 3 | D4 | 4 | D0 | 0 | D1 |
| 11 | D1 | 1 | D2 | 2 | D3 | 3 | D4 | 4 | D0 | 0 |
| 12 | 0 | D1 | 1 | D2 | 2 | D3 | 3 | D4 | 4 | D0 |
| 13 | D0 | 0 | D1 | 1 | D2 | 2 | D3 | 3 | D4 | 4 |
| 14 | 4 alt | D0Alt | 0Alt | D1 alt | 1 alt | D2 alt | 2 alt | D3 alt | 3 alt | D4 alt |

| | | | | | | | | | | |
|---|---|---|---|---|---|---|---|---|---|---|
| 1 | 0A | 0B | 1A | 1B | 2A | 2B | 3A | 3B | 4A | 4B |
| 2 | | 0A | | 1A | | 2A | | 3A | | 4A |
| 3 | D0A | 0' | D1A | 1' | D2A | 2' | D3A | 3' | D4A | 4' |
| 4 | 4 | D0 | 0 | D1 | 1 | D2 | 2 | D3 | 3 | 04 |
| 5 | 04 | 4 | D0 | 0 | D1 | 1 | D2 | 2 | D3 | 3 |
| 6 | 3 | 04 | 4 | D0 | 0 | D1 | 1 | D2 | 2 | D3 |
| 7 | D3 | 3 | 04 | 4 | D0 | 0 | D1 | 1 | D2 | 2 |
| 8 | 2 | D3 | 3 | D4 | 4 | D0 | 0 | D1 | 1 | D2 |
| 9 | D2 | 2 | D3 | 3 | D4 | 4 | D0 | 0 | D1 | 1 |
| 10 | 1 | D2 | 2 | D3 | 3 | D4 | 4 | D0 | 0 | D1 |
| 11 | D1 | 1 | D2 | 2 | D3 | 3 | D4 | 4 | D0 | 0 |
| 12 | 0 | D1 | 1 | D2 | 2 | D3 | 3 | D4 | 4 | D0 |
| 13 | D0 | 0 | D1 | 1 | D2 | 2 | D3 | 3 | D4 | 4 |
| 14 | 4 alt | D0Alt | 0Alt | D1 alt | 1 alt | D2 alt | 2 alt | D3 alt | 3 alt | D4 alt |
| | | | | | | | | | | |
| | | | | | | | | | | |

In der vorstehenden Tabelle 1 sind zwei komplette Kommunikationen dargestellt, bei der das Protokoll fünf Teilnehmer lang ist und in jedem Knoten zwei Datenpakete erzeugt werden. Die in den Tabellenfeldern stehenden Kurzzeichen stellen die Sendedaten des jeweiligen Mikroprozessors dar. In einer Spalte ergibt sich, welche Daten der Reihe nach gesendet werden. So steht 0A bzw. 0B für das vom ersten bzw. vom zweiten Mikroprozessor des ersten Knoten gesendete Prozeßdatum. 0' steht für das Ergebnis des ersten Vergleichs der Zweikanaligkeit. 0 steht für das Ergebnis aus der Zusammenführung des ersten Vergleichsergebnisses und eines zweiten Vergleichsergebnisses, also dem Prozeßdatum. Das zweite Vergleichsergebnis entsteht in dem Knoten. Es wird nicht kommuniziert und tritt deshalb auch nicht in der Tabelle in Erscheinung. D0B liegt im Knoten OB vor und muß zur Zusammenfassung des Gesamtdatums D0 nicht kommuniziert werden. D0 enthält Informationsdaten ohne Sicherheitsfunktion während das Prozeßdatum 0 Informationen enthält, die sicherheitstechnisch auswertbar sind. Das Prozeßdatum 0 wird von diesem Knoten über den nächsten Knoten an das ringförmige Sicherheitssystem und damit an sämtliche Knoten weitergegeben. (von Zeile 4, Spalte 1 abwärts verlaufende Diagonale).

Weiterhin steht D0A für das durch den ersten Mikroprozessor ermittelte informelle Datenpaket, während das durch den zweiten Mikroprozessor des ersten Knotens ermittelte informelle Datenpaket D0B nicht dargestellt ist, stattdessen in Zeile 4, Spalte 0B die aus der Summe der vorgenannten Datenpakete gebildeten Daten des kompletten ersten Knotens die D0 angegeben sind.

Die entsprechenden Daten (Prozeßdatum n, mit n gleich null bis vier, informellen Daten DnA jedes Kerns mit n gleich null bis vier werden durch das gesamte ringförmige Sicherheitssystem geschickt, wie an dem Verlauf der Daten entlang der Diagonalen, wobei jede Zeile einen Zeitpunkt darstellt, erkennbar ist.

Die ermittelten Daten können durch eine Diagnoseeinheit an jedem der Knoten abgenommen werden, ohne daß die Diagnoseeinheit selbst in den Datenfluß bzw. die Verarbeitung durch aktive Eingriffe wie in Form von Kommandos eingreift, so daß ein Sicherheitsrisiko durch die Diagnose ausgeschlossen ist.

### Bezugszeichenliste

- 1: Sicherheitssystem
- 2: Knoten
- 3, 3': Mikroprozessoren
- 4: Eingänge
- 5: Ausgänge
- 6: ankommende Schnittstelle
- 7: weiterleitende Schnittstelle
- 9: informelle Eingänge
- 11: Eingangssignale
- 12: Prozeßbereinigung
- 13: Prozeßkommunikation
- 14: Ringkommunikation
- 15: Prozeßdaten
- 16: Verknüpfung
- 17: sicherheitsrelevanter Ausgang

## Patentansprüche

1. Verfahren zum Verarbeiten von maschinenrelevanten Daten, mit mehreren in einem Ring verbundenen Knoten, wobei in jedem Knoten die von diesem empfangenen Daten verarbeitet und an den nächsten Knoten weiter gegeben werden, **dadurch gekennzeichnet, dass** in einem Sicherheitssystem für eine Maschine die im Ring verbundenen Knoten sicherheitsrelevante Daten gleichzeitig empfangen, die Knoten die ihnen vom jeweiligen vorherigen Knoten übergebenen Daten gleichzeitig bearbeiten und die bearbeiteten Daten gleichzeitig an den nächsten Knoten weitergeben.

2. Verfahren nach Anspruch 1, **dadurch gekennzeichnet, dass** zur Diagnose eine Diagnoseeinheit die mindestens einen Knoten vorhandenen Daten passiv aufnimmt.

3. Verfahren nach Anspruch 1 oder 2, **dadurch gekennzeichnet, dass** in jedem Knoten identische Sicherheitsverknüpfungen durchgeführt und im Ergebnis überprüft werden.

4. Verfahren nach einem der vorangehenden Ansprüche, **dadurch gekennzeichnet, dass** die Daten von den Knoten zweikanalig empfangen werden.

5. Verfahren nach Anspruch 4, **dadurch gekennzeichnet, dass** die sicherheitsrelevanten Eingänge jedes Knotens durch zwei Mikroprozessoren parallel ausgewertet werden.

6. Verfahren nach einem der vorangehenden Ansprüche, **dadurch gekennzeichnet, dass** die Daten von den Knoten zweikanalig zu sicherheitsrelevanten Stellgliedern ausgegeben werden.

7. Verfahren nach einem der vorangehenden Ansprüche, **dadurch gekennzeichnet, dass** die zwischen den Knoten übergebenen Daten über serielle Schnittstellen aufgenommen bzw. weiter gegeben werden.

8. Verfahren nach einem der vorangehenden Ansprüche, dass jeweils ein Byte, also 8 Bit parallel übertragen werden.

9. Verfahren nach einem der vorangehenden Ansprüche, **dadurch gekennzeichnet, dass** in einem jeweiligen Knoten nach Aufnahme von Eingangssignalen eine Prozessbereinigung derselben und eine Einkupplung in die Prozesskommunikation erfolgt.

10. Verfahren nach einem der vorangehenden Ansprüche, **dadurch gekennzeichnet, dass** nach Einlesen von Prozessdaten aus der Ringkommunikation zwischen den Knoten unmittelbar eine Verknüpfung der Daten erfolgt und ein sicherheitsrelevanter Ausgang angesteuert wird.

11. Verfahren nach einem der vorangehenden Ansprüche, **dadurch gekennzeichnet, dass** ein Controller eines Knotens in jeder Zeile genau ein Datenpaket eines fremden Controllers verarbeitet.

12. Verfahren nach einem der vorangehenden Ansprüche, **dadurch gekennzeichnet, dass** an jeder Slave-Controller eines Knotens ein zu sendendes Datenpaket in einem Sendepuffer abspeichert, bevor er ein folgendes Datenpaket enthält.

13. Verfahren nach einem der vorangehenden Ansprüche, **dadurch gekennzeichnet, dass** das Senden und Empfangen von Daten parallel erfolgt.

14. Verfahren nach einem der vorangehenden Ansprüche, **dadurch gekennzeichnet, dass** die Datenkommunikation zwischen sämtlichen Knoten mit unterschiedlichen Dateninhalten, aber gleich langen Daten parallelen Paketen erfolgt.

## Claims

1. Process for processing machine-relevant data, with several nodes connected in a ring, where in each node the data received by it are processed and transferred to the next node, **characterized in that** in a safety system for a machine, the ring-connected nodes simultaneously receive safety-relevant data, the nodes simultaneously process the data transferred to them by the in each case preceding node and transfer the processed data simultaneously to the next node.

2. Process according to claim 1, **characterized in that** for diagnosis purposes use is made of a diagnostic unit, which passively receives the data present in at least one node.

3. Process according to claim 1 or 2, **characterized in that** in each node identical safety links are performed and the result is checked.

4. Process according to one of the preceding claims, **characterized in that** the data are received in two-channel form from the nodes.

5. Process according to claim 4, **characterized in that** the safety-relevant inputs of each node are evaluated in parallel by two microprocessors.

6. Process according to one of the preceding claims, **characterized in that** the data from the nodes are outputted in two-channel manner to safety-relevant control elements.

7. Process according to one of the preceding claims, **characterized in that** the data transferred between the nodes are received or passed on by means of serial interfaces.

8. Process according to one of the preceding claims, **characterized in that** in each case one byte, i.e. 8 bits are transmitted in parallel.

9. Process according to one of the preceding claims, **characterized in that**, following the reception of input signals, in any particular node there is a process debugging thereof and a coupling into the process communication.

10. Process according to one of the preceding claims, **characterized in that** following the reading of process data from the ring communication between the nodes there is a direct linking of the data and a safety-relevant output is controlled.

11. Process according to one of the preceding claims, **characterized in that** a controller of a node in each line or row processes precisely one data packet of an external controller.

12. Process according to one of the preceding claims, **characterized in that** at each slave controller of a node a data packet to be transmitted is stored in an transmission buffer before it receives a following data packet.

13. Process according to one of the preceding claims, **characterized in that** data transmission and reception take place in parallel.

14. Process according to one of the preceding claims, **characterized in that** data communication between all the nodes takes place with different data contents, but equally long parallel data packets.

## Revendications

1. Procédé de traitement de données relatives à une machine comportant plusieurs noeuds réunis en un anneau, dans lequel les données reçues par chacun des noeuds sont traitées dans celui-ci et acheminées vers le noeud suivant, **caractérisé en ce que** dans un système de sécurité destiné à une machine, les noeuds réunis en anneau reçoivent simultanément des données relatives à la sécurité, les données transmises par chacun des noeuds précédents aux noeuds sont traitées simultanément par ces derniers et les données traitées sont transmises simultanément au noeud suivant.

2. Procédé selon la revendication 1, **caractérisé en ce que** pour le diagnostic, une unité de diagnostic reçoit de manière passive les données présentes dans au moins un noeud.

3. Procédé selon la revendication 1 ou 2, **caractérisé en ce que** l'on effectue dans chaque noeud des liaisons de sécurité identiques et qu'on les vérifie au résultat.

4. Procédé selon l'une quelconque des revendications précédentes, **caractérisé en ce que** les noeuds reçoivent les données par deux canaux.

5. Procédé selon la revendication 4, **caractérisé en ce que** les entrées relatives à la sécurité de chaque noeud sont évaluées en parallèle par deux microprocesseurs.

6. Procédé selon l'une quelconque des revendications précédentes, **caractérisé en ce que** les données sont acheminées par les noeuds par deux canaux vers des actionneurs relatifs à la sécurité.

7. Procédé selon l'une quelconque des revendications précédentes, **caractérisé en ce que** les données transmises entre les noeuds sont reçues ou répercutées par des interfaces série.

8. Procédé selon l'une quelconque des revendications précédentes, **caractérisé en ce qu'**à chaque fois un octet, c'est-à-dire 8 bits sont transmis en parallèle.

9. Procédé selon l'une quelconque des revendications précédentes, **caractérisé en ce que** dans chacun des noeuds s'effectue, après réception de signaux d'entrée, une épuration de processus de ceux-ci et une injection dans la communication de processus.

10. Procédé selon l'une quelconque des revendications précédentes, **caractérisé en ce qu'**immédiatement après la lecture de données de processus provenant de la communication annulaire entre les noeuds s'effectue une liaison de données et **en ce qu'**on sélectionne une sortie relative à la sécurité.

11. Procédé selon l'une quelconque des revendications précédentes, **caractérisé en ce qu'**un contrôleur d'un noeud traite dans chaque ligne exactement un paquet de données d'un autre contrôleur.

12. Procédé selon l'une quelconque des revendications précédentes, **caractérisé en ce que** chaque contrôleur asservi d'un noeud mémorise un paquet de données à envoyer dans une mémoire tampon d'envoi avant de contenir un paquet suivant de données.

13. Procédé selon l'une quelconque des revendications précédentes, **caractérisé en ce que** l'envoi et la réception de données s'effectuent en parallèle.

14. Procédé selon l'une quelconque des revendications précédentes, **caractérisé en ce que** la communication de données entre l'ensemble des noeuds s'effectue par paquets parallèles de données de contenus différents mais de longueur identique.
